# EUROPÄISCHE PATENTSCHRIFT

(11) **EP 3 104 677 B1**
(45) Veröffentlichungstag und Bekanntmachung des Hinweises auf die Patenterteilung: **06.06.2018**
(21) Anmeldenummer: 15708435.1
(22) Anmeldetag: 11.02.2015
(51) Int. Cl.: A01C 5/06

(54) **BODENBEARBEITUNGSMASCHINE MIT EINER INJEKTIONSEINRICHTUNG UND EINER SCHLITZVERSCHLUSSEINRICHTUNG SOWIE SCHAR EINER SOLCHEN BODENBEARBEITUNGSMASCHINE**
SOIL WORKING MACHINE AND COULTER WITH INJECTION DEVICE AND FURROW CLOSING DEVICE
MACHINE DE TRAVAIL DE SOL ET SOC AVEC DISPOSITIF D'INJECTION ET DISPOSITIF À FERMER LE SILLON

(30) Priorität: 14.02.2014 DE 102014002658
(43) Veröffentlichungstag der Anmeldung: 21.12.2016
(73) Patentinhaber: RAUCH Landmaschinenfabrik GmbH, 76547 Sinzheim (DE)
(72) Erfinder: MÜLLER-SÄMANN, Karl, 73207 Plochingen (DE); MAIER, Jürgen, 79238 Ehrenkirchen (DE)
(74) Vertreter: Lenz, Steffen
(86) Internationale Anmeldenummer: PCT/EP2015/000296
(87) Internationale Veröffentlichungsnummer: WO 2015/120982

(56) Entgegenhaltungen:
- DE-A1- 3 240 169
- DE-A1-102009 013 771
- DE-C- 277 201
- GB-A- 1 228 337
- US-A- 2 884 880
- US-A- 2 924 189

## Beschreibung

Die Erfindung betrifft eine Bodenbearbeitungsmaschine, insbesondere Düngerstreuer und/oder Sämaschine, mit wenigstens einer Injektionseinrichtung zur Ablage von festen partikelförmigen Stoffen, insbesondere Streugut und/oder Saatgut, in einem Boden, wobei die Injektionseinrichtung einen Grundkörper und einen am unteren Ende des Grundkörpers angeordneten Austrittskörper für die Stoffe aufweist, und wobei der Injektionseinrichtung ferner eine Schlitzverschlusseinrichtung nachgeordnet ist, welche an der - in Fahrtrichtung betrachtet - Rückseite des Grundkörpers der Injektionseinrichtung vorgesehen ist und wenigstens ein Kratzelement aufweist, welches zum Wiederverschließen des von dem Grundkörper erzeugten Schlitzes in dem Boden ausgebildet ist, indem es die Seitenwände des in dem Boden erzeugten Schlitzes aufkratzt. Die Erfindung bezieht sich ferner auf eine für eine solche Bodenbearbeitungsmaschine, insbesondere Düngerstreuer und/oder Sämaschine, geeignete Schar, mit einer Trageinrichtung, wenigstens einer Schneideinrichtung, wenigstens einer Injektionseinrichtung zur Ablage von festen partikelförmigen Stoffen, insbesondere Streugut und/oder Saatgut, in einem Boden, wobei die Injektionseinrichtung einen Grundkörper und einen am unteren Ende des Grundkörpers angeordneten Austrittskörper für die Stoffe aufweist, und mit einer der Injektionseinrichtung nachgeordneten Schlitzverschlusseinrichtung, welche an der - in Fahrtrichtung betrachtet - Rückseite des Grundkörpers der Injektionseinrichtung vorgesehen ist und wenigstens ein Kratzelement aufweist, welches zum Wiederverschließen des von dem Grundkörper erzeugten Schlitzes in dem Boden ausgebildet ist, indem es die Seitenwände des in dem Boden erzeugten Schlitzes aufkratzt,

Bodenbearbeitungsmaschinen bzw. mit Scharen ausgestattete Bodenbearbeitungsmaschinen finden in der Landwirtschaft insbesondere in Form von Verteilmaschinen in Form von Düngerstreuern oder Sämaschinen, wie beispielsweise Kastensämaschinen, pneumatischen Sämaschinen und dergleichen, verbreiteten Einsatz, wenn es darum geht, partikelförmige Feststoffe, wie insbesondere Streugut und/oder Saatgut, in den Boden einzubringen. Zu diesem Zweck wird der zu bearbeitende Boden üblicherweise mittels der Schneideinrichtung, z.B. in Form einer oder mehrerer Schneidscheiben, aufgebrochen und wird mittels der der Schneideinrichtung nachgeordneten Injektionseinrichtung der Dünger und/oder das Saatgut in den im Boden erzeugten Schlitz, wie einer Säfurche, eingebracht. Der Grundkörper der Injektionseinrichtung wird dabei durch den Schlitz gezogen, so dass der unterhalb des Grundkörpers angeordnete Austrittskörper die vorgenannten Feststoffe direkt in dem Schlitz bzw. in dem durch den Austrittskörper der Injektionseinrichtung geformten Tunnel abzulegen vermag. Wie bereits erwähnt, kann es sich bei den Feststoffen um Saatgut oder auch um Dünger, beispielsweise granulierten Mineraldünger oder dergleichen, handeln, welcher beispielsweise zwischen bereits vorhandene Pflanzenreihen eingebracht werden kann. Darüber hinaus kann es sich auch um Saatgut-/Düngermischungen handeln, sofern z.B. eine Startdüngung erwünscht ist.

Die Injektionseinrichtung sollte dabei - senkrecht zur Fahrtrichtung betrachtet - möglichst schmal ausgestaltet sein, so dass einerseits während des Betriebs keine zu hohen Zugkräfte erforderlich sind, um sie durch den Boden zu ziehen, andererseits der Boden nicht in unnötigem Maße gestört und verworfen wird, um für eine genaue Dünger- und/oder Saatgutablage zu sorgen.

Die US 2 842 077 A beschreibt eine Säschar mit einer Injektionseinrichtung zur Ablage von partikelförmigen Feststoffen, wie Saatgut und Dünger, im Boden, wobei die Injektionseinrichtung einen Grundkörper aufweist, welcher schmaler ausgebildet ist als ein an der Unterseite desselben angeordneter Austrittskörper, so dass während des Betriebs eine möglichst schmale schlitzartige Säfurche im Boden entsteht. Eine ähnliche Injektionseinrichtung ist der US 6 405 665 B1 zu entnehmen, deren Austrittskörper wiederum breiter sein kann als ein diesen tragender Grundkörper.

Bei der landwirtschaftlichen Bodenbearbeitung und insbesondere beim Einbringen von Saatgut, aber auch Düngemitteln, in den Boden mittels gattungsgemäßer Bodenbearbeitungsmaschinen ist es einerseits für das Keimen und Heranwachsen der Saat entscheidend, dass die z.B. unter Verwendung von Säscharen, wie z.B. Schlepp- oder Scheibenscharen, oder auch nur mittels des Grundkörpers der Injektionseinrichtung erzeugten, im Wesentlichen schlitzförmigen Säfurchen nach dem Ablegen des Saat- und/oder Streugutes in denselben wieder gleichmäßig und vollständig verschlossen werden. So stellen wichtige Voraussetzungen für eine erfolgreiche Keimung insbesondere eine ausreichende Wasserversorgung, eine optimale Sauerstoffversorgung und eine der Pflanzenart angepasste Keimtemperatur dar. Alle drei der genannten Keimfaktoren werden dabei maßgeblich von der Ablagetiefe der Saat und ihrem Kontakt mit dem sie umgebenden Boden beeinflusst. Eine zunehmende Ablagetiefe erhöht die Keimwasserversorgung, vermindert aber das Sauerstoffangebot im Boden.

Ferner erreicht die von der Sonne ausgelöste Bodenerwärmung bei einer größeren Ablagetiefe das Saatgut später. Eine präzise Saatgutverteilung im Boden sichert ferner eine gute Standraumverteilung der Pflanzen für optimales und gleichmäßiges Wachstum. Zu geringe Abstände der Saatgutkörner können zu Wassermangel und Konkurrenzverhalten unter den Pflanzen führen, zu große Abstände reduzieren den Ertrag und begünstigen den Einschuss von Unkraut. Unabhängig vom Aufbau der Säscharen werden diese Voraussetzungen nur durch eine konstante Ablagetiefe und einen gleichmäßigen Ablageabstand des Saatgutes erfüllt, welcher nicht zuletzt durch die in der Regel im Bereich des freien Endes der Säschar angeordnete Schlitzverschlusseinrichtung sichergestellt wird, welche das in der Säfurche abgelegte Saatgut gleichmäßig mit Bodenmaterial bedecken soll und hierdurch auch eine Verlagerung des Saatgutes, sei es durch Wind oder Niederschlagswasser, verhindert. Insbesondere letzteres gilt in gleichem Maße für die Ablage von Streugut, wie insbesondere verschiedenen Mineraldüngersorten, wobei sich hier ein zusätzliches Problem dadurch ergibt, dass sich Mineraldünger im Falle eines nicht und nicht vollständig verschlossenen Schlitzes unter Sonneneinstrahlung zersetzen, so dass sich einerseits eine Unterversorgung der Pflanzen ergibt, andererseits Schadstoffe, insbesondere in Form verschiedener Stickstoffverbindungen, wie Stickoxiden, Lachgas und dergleichen, freigesetzt werden. Andererseits besteht freilich auch bei Dünger die Gefahr einer Rillenerosion im Falle von Niederschlag, wenn der in dem Boden ausgebildete Schlitz, in welchen der Dünger abgelegt worden ist, nicht wieder gänzlich verschlossen wird. Dies führt dann infolge lokaler Unter- und/oder Überdüngung zu einer Hemmung des Wurzelwachstums der kultivierten Pflanzen.

Die DE 32 40 169 A1 beschreibt eine Bodenbearbeitungsmaschine mit einer Injektionseinrichtung, welche zum Einbringen von partikelförmigen Feststoffen, insbesondere Düngemitteln, in den Boden vorgesehen ist. Ein Grundkörper der Injektionseinrichtung ist wiederum schmäler als ein unterhalb desselben positionierter Austrittskörper ausgebildet, um den im Boden erzeugten Schlitz bzw. die Säfurche möglichst schmal zu halten. Der Injektionseinrichtung ist eine Schlitzverschlusseinrichtung in Form eines Zinkenrotors nachgeordnet, welcher zum Verschließen des im Boden erzeugten Schlitzes nach Ablage des Streu- oder Saatgutes dienen soll. Indes sind derartige Zinkenrotoren nicht nur relativ aufwändig und teuer und erfordern überdies einen eigenen Rotationsantrieb, sondern hat sich gezeigt, dass sie zum einwandfreien Zustreichen von insbesondere schmalen Säfurchen nur bedingt geeignet sind, weshalb die DE 32 40 169 A1 zusätzlich eine dem Zinkenrotor nachgeordnete Packerwalze vorsieht, um den Boden stromab der Stoffablage wieder einzuebnen und zu verdichten.

Die US 2 884 880 A beschreibt eine Säschar für eine Bodenbearbeitungsmaschine in Form einer Sämaschine, welche eine Injektionseinrichtung zur Ablage von Saatgut in einem Boden aufweist. Die Injektionseinrichtung umfasst einen Grundkörper und einen am unteren Ende des Grundkörpers angeordneten Austrittskörper. Der Injektionseinrichtung ist ferner eine Schlitzverschlusseinrichtung nachgeordnet, welche an der Rückseite des Grundkörpers festgelegt ist und zwei Kratzelemente aufweist, welche zum Wiederverschließen des von dem Grundkörper erzeugten Schlitzes in dem Boden dienen sollen, indem die Seitenwände des in dem Boden erzeugten Schlitzes aufgekratzt werden. Die Kratzelemente sind dabei von starren, etwa dreieckförmigen Blechen mit scharf nach vorne vorstehenden Rändern gebildet.

Schließlich beschreibt die US 2 924 189 A eine weitere Bodenbearbeitungsmaschine zum Einbringen von Saatgut oder Dünger in den Boden, welche gleichfalls eine Injektionseinrichtung mit einem Grundkörper und einen an dessen unterem Ende angeordneten Austrittskörper besitzt. Der Injektionseinrichtung ist wiederum eine Schlitzverschlusseinrichtung nachgeordnet, welche an der Rückseite der Injektionseinrichtung vorgesehen ist und wenigstens zwei nach Art von Messern ausgestaltete Kratzelemente mit hiervon seitlich nach außen vorstehenden Spitzen aufweist, welches zum Wiederverschließen des von dem Grundkörper erzeugten Schlitzes in dem Boden dienen sollen. Die Kratzelemente sind dabei höhenverstellbar an den beiden entgegengesetzten Seiten des Grundkörpers mittels Bolzen befestigt.

Darüber hinaus sind Schlitzverschlusseinrichtungen mit Zustreichwerkzeugen in Form von sogenannten "Striegeln" bekannt, welche üblicherweise einen oder mehrere gebogene und von oben gegebenenfalls unter elastischer Vorspannung gegen den Boden stehenden Metallstäben gebildet sind. So beschreibt beispielsweise die EP 2 168 415 A1 eine Schlitzverschlusseinrichtung, deren in der vorgenannten Weise ausgebildeten Zustreichwerkzeuge in Form von Striegeln an einem sich senkrecht zur Fahrtrichtung einer Sämaschine erstreckenden Träger festgelegt sind, wobei die Zustreichwerkzeuge im Wesentlichen - in Fahrtrichtung betrachtet - in Flucht mit den Säscharen angeordnet sind, um die von letzteren erzeugte Säfurche von oben zuzustreichen. Eine weitere Schlitzverschlusseinrichtung mit Zustreichwerkzeugen in Form von Striegeln ist als solche der DE 70 19 019 U zu entnehmen, wobei die Striegel aus Federdraht gebildet sind, um für einen gewissen Andruck derselben an den Boden zu sorgen.

Davon abgesehen, dass derartige Zustreichwerkzeuge in Form von Striegeln an einem separaten Träger festgelegt sein sollten, um sie von ihrer Betriebsposition, in welcher sie sich - in Fahrtrichtung der Bodenbearbeitungsmaschine betrachtet - nach hinten und unten erstrecken, auszuheben oder verschwenken zu können, damit sie bei der Rückwärtsfahrt nicht Gefahr laufen, sich im Boden zu verhaken und dadurch verbogen oder gar zerbrochen zu werden (vgl. hierzu z.B. die DE 10 2006 038 724 A1 oder die DE 10 2008 045 635 A1), vermögen auch derartige Striegel nicht immer für eine gleichmäßige und vollständige Bedeckung des in dem Schlitz bzw. in der Säfurche abgelegten Streu- und/oder Saatgutes zu sorgen. Dies gilt aufgrund ihrer Einwirkung auf den Boden von oben insbesondere dann, wenn der Schlitz relativ schmal und tief ist, wie es andererseits aus den eingangs genannten Gründen erwünscht sein kann.

Der Erfindung liegt daher die Aufgabe zugrunde, eine Bodenbearbeitungsmaschine sowie eine hierfür geeignete Schar der eingangs genannten Art auf einfache und kostengünstige Weise dahingehend weiterzubilden, dass den vorgenannten Nachteilen zumindest größtenteils begegnet werden kann.

Erfindungsgemäß wird diese Aufgabe bei einer Bodenbearbeitungsmaschine sowie bei einer hierfür geeigneten Schar der eingangs genannten Art dadurch gelöst, dass die Schlitzverschlusseinrichtung wenigstens einen im Wesentlichen stabförmigen Träger aufweist, welcher im Wesentlichen vertikal angeordnet ist oder zumindest eine vertikale Erstreckungsrichtungskomponente aufweist und in den im Boden erzeugten Schlitz eingreift, wobei an dem im Wesentlichen stabförmigen Träger das Kratzelement angeordnet ist, wobei
- das Kratzelement von einem Federelement gebildet ist und/oder
- es sich bei dem im Wesentlichen stabförmigen Träger um einen elastischen Träger handelt.

Die erfindungsgemäße Ausgestaltung zeichnet sich insoweit durch eine Abkehr von aus dem Stand der Technik bekannten Schlitzverschlusseinrichtungen aus, als ihr(e) in den Schlitz bzw. in die Säfurche eingreifende(s) Kratzelement(e) nicht von oben auf den Schlitz einwirkt und nur neben dem Schlitz befindliches Erdreich in den Schlitz hineinstreicht, sondern das Erdreich an den seitlichen Wänden des Schlitzes abkratzt, so dass es in den Schlitz fällt und diesen verstopft und dadurch das abgelegte Streu- und/oder Saatgut gleichmäßig und zuverlässig bedeckt wird. Auf diese Weise lassen sich insbesondere - wenn auch nicht ausschließlich - relativ schmale Schlitze bzw. Säfurchen direkt nach der Ablage der jeweiligen Stoffe weitestgehend vollständig - d.h. von dem Grund des Schlitzes, in welchem der Dünger bzw. das Saatgut abgelegt worden ist, bis zur Bodenoberfläche - verschließen, so dass das Streu- und/oder Saatgut vor Umwelteinflüssen, wie insbesondere Regen und Sonneneinstrahlung, geschützt wird.

Im Hinblick auf einen konstruktiv sehr einfachen Aufbau der Schlitzverschlusseinrichtung weist diese wenigstens einen im Wesentlichen stabförmigen Träger auf, an welchem das bzw. die Kratzelement(e) angeordnet ist bzw. sind. Der stabförmige Träger ist hierbei im Wesentlichen vertikal oder zumindest mit einer vertikalen Erstreckungsrichtungskomponente, z.B. aus der Vertikalen schräg nach hinten geneigt, angeordnet, um für einen einfachen Eingriff des bzw. der hieran festgelegten oder gelagerten Kratzelemente(s) in den im Boden erzeugten Schlitz zu sorgen. Der im Wesentlichen stabförmige Träger kann dabei entweder beidseitig oder auch nur einseitig, insbesondere an dessen oberem Ende, an der Injektionseinrichtung und/oder an einer Trageinrichtung derselben befestigt sein, wobei im Falle einer nur oberseitigen Befestigung gegebenenfalls ein noch tieferer Eingriff des bzw. der Kratzelemente(s) in den Boden möglich ist und der Schlitzverschluss folglich noch unmittelbarer über dem in dem Schlitz abgelegten Streu- und/oder Saatgut erfolgen kann. Der im Wesentlichen stabförmige Träger kann ferner einerseits in Form einer mehr oder minder starren Stange ausgebildet sein, oder er kann stattdessen insbesondere auch elastisch sein, wobei sich diesbezüglich neben einem Drahtseil insbesondere auch ein Federzinken, beispielsweise aus Federstahl oder dergleichen, bewährt hat, welcher sich an der - in Fahrtrichtung betrachtet - Rückseite des Grundkörpers der Injektionseinrichtung ins Innere des hiervon erzeugten Schlitzes in dem Boden erstreckt. Durch eine derartige federnde Halterung der Kratzeelemente vermag deren Wirkung noch erhöht werden, indem ihnen der elastische Träger eine zusätzliche Dynamik beim Bodenverschluss verleiht.

Alternativ oder zusätzlich zu einem das bzw. die Federelemente tragenden, elastischen Träger sieht die Erfindung vor, dass das Kratzelement von einem Federelement gebildet ist. Derartige Federelemente vermögen für einen höchst wirksamen Schlitzverschluss zu sorgen, indem sie bei jedem Kontakt mit den seitlichen Wänden des Schlitzes zurückfedern können und sofort mit anderen Bereichen der Seitenwände in Berührung kommen, um das dortige Erdreich gleichfalls abzukratzen, wobei die federnden Rückstellkräfte die Federelemente auch bei nur schwachen Berührungen mit den Seitenwänden des Schlitzes stets in Schwingungen halten können. Darüber hinaus besitzen derartige Federelemente den Vorteil, dass sie beim Auftreffen auf harte Erdklumpen oder Steine nachgeben können und nicht zerstört werden, wodurch ihre volle Funktionsfähigkeit erhalten bleibt.

Wie weiter unten noch näher erläutert, kann die erfindungsgemäße Schlitzverschlusseinrichtung dabei sehr einfach und kostengünstig ausgestaltet sein, wobei sie keine separaten Verstelleinrichtungen erfordert und z.B. auch in die Injektionseinrichtung integriert sein kann.

In diesem Zusammenhang kann beispielsweise vorgesehen sein, dass die Schlitzverschlusseinrichtung
- an dem Grundkörper und/oder an dem Austrittskörper der Injektionseinrichtung und/oder
- an einer Trageinrichtung derselben
festgelegt ist.

Gemäß einer vorteilhaften Ausgestaltung kann vorgesehen sein, dass das bzw. die Kratzelement(e) der Schlitzverschlusseinrichtung beweglich angeordnet ist bzw. sind. Auf diese Weise kann die Wirksamkeit der Kratzelemente erhöht werden, indem sie aufgrund ihrer beweglichen Anordnung bei jedem Kontakt mit dem an den Seitenwänden des Schlitzes befindlichen Boden zumindest geringfügig - sei es translatorisch und/oder sei es rotatorisch - verlagert werden können, so dass sie schneller an andere Stellen des an den Schlitzwänden vorhandenen Bodens anstoßen und den Boden dort abkratzen können.

Wie bereits angedeutet, kann der im Wesentlichen stabförmige Träger insbesondere in Form einer Stange, eines Drahtseils oder eines Federzinkens ausgestaltet sein.

In vorteilhafter Weiterbildung kann vorgesehen sein, dass eine Mehrzahl an Kratzelementen übereinander angeordnet ist. Die an dem etwa stabförmigen Träger der vorgenannten Art - vorzugsweise beweglich - festgelegten Kratzelemente vermögen hierdurch insbesondere weitgehend unabhängig voneinander und an verschiedenen Stellen der Seitenwände des in dem Boden erzeugten Schlitzes zugleich ihre Kratzwirkung zu entfalten, um den Schlitz gleichmäßig zu verschließen. Zu diesem Zweck können die Kratzelemente beispielsweise durch Distanzringe voneinander getrennt sein.

Sofern die Kratzelemente selbst von Federelementen gebildet sind, kann bzw. können das bzw. die Federelement(e) insbesondere (eine) Schenkelfeder(n) aufweisen, wobei ein solches Federelement vorzugsweise einen im Wesentlichen in Form einer spiralförmigen Wicklung ausgebildeten Lagerabschnitt, an welchem es insbesondere an dem im Wesentlichen stabförmigen Träger unter Eingriff desselben in die spiralförmige Wicklung drehbar gelagert sein kann, und wenigstens einen hiervon radial (d.h. nicht notwendigerweise exakt radial, sondern mit radialer Erstreckungsrichtungskomponente) vorstehenden, endständigen Kratzabschnitt aufweist, mit welchem das Federelement während des Betriebs mit den Seitenwänden des Schlitzes in Kontakt gelangt. Das als Federelement ausgebildete Kratzelement kann dabei zweckmäßigerweise zwei von dem im Wesentlichen in Form einer spiralförmigen Wicklung ausgebildeten, zentralen Lagerabschnitt radial vorstehende, endständige Kratzabschnitte aufweisen, so dass seine beiden Enden während des Betriebs zum Abkratzen der Seitenwände des Schlitzes in der Lage sind.

Damit die Kratz- bzw. Federelemente den Boden im Bereich der Seitenwände des Schlitzes wirkungsvoll abkratzen können, kann ein jeweiliges Kratz- bzw. Federelement je nach Bodenbeschaffenheit vorteilhafterweise an seinem/seinen freien Ende(n) abgeflachte, verbreiterte, gedrehte, scharfe oder abgerundete Spitzen und/oder Haken aufweisen.

Darüber hinaus kann zum Zwecke eines einfachen Austausches der Kratz- bzw. Federelemente beispielsweise dann, wenn sie aufgrund Verschleißes abgenutzt sind, mit Vorteil vorgesehen sein, dass zumindest das bzw. die Kratz- bzw. Federelement(e) der Schlitzverschlusseinrichtung, insbesondere die gesamte Schlitzverschlusseinrichtung, also beispielsweise der im Wesentlichen stabförmige Träger mit den hieran angeordneten Kratz- bzw. Federelementen, auswechselbar angeordnet ist bzw. sind.

Wie bereits erwähnt, bietet sich die erfindungsgemäße Schlitzverschlusseinrichtung insbesondere zum Verschließen auch von relativ schmalen, tiefen Schlitzen bzw. Säfurchen an, welche sich aus den eingangs genannten Gründen als vorteilhaft erweisen können. Folglich kann gemäß einer vorteilhaften Weiterbildung vorgesehen sein, dass der Grundkörper der Injektionseinrichtung schmäler ausgebildet ist als deren Austrittskörper, wobei der Grundkörper insbesondere derart flach oder schmal ausgebildet ist, dass beim Betrieb eine durch den Grundkörper erzeugte schmale schlitzartige Öffnung in dem Boden entsteht. Auf diese Weise ist eine genaue Platzierung der festen Stoffe - sei es Streugut, wie Dünger, und/oder sei es Saatgut - möglich, beispielsweise in Form eines konzentrierten Düngerdepots zwischen den auf dem Feld vorhandenen Pflanzenreihen. Ferner erfordert eine mit einer solchen Injektionseinrichtung ausgestattete Schar eine vergleichsweise nur geringe Zugkraft während des Betriebs. Während des Bodenbearbeitungsbetriebs wird folglich aufgrund des schmalen Grundkörpers der Injektionseinrichtung eine nur schlitzartige Öffnung im Boden erzeugt, an welche sich nach unten hin ein etwa zylinderförmiger Hohlraum mit gegenüber dem Schlitz größerer Breite anschließt, welcher beim Betrieb durch den Austrittskörper der Injektionseinrichtung erzeugt wird und welcher folglich entsprechend der Form des Austrittskörpers ausgebildet ist, z.B. einen etwa runden, ovalen, mehreckigen oder andersartig geformten Querschnitt besitzen kann. In diesem Hohlraum werden die festen Stoffe zur Aussaat und/oder Düngung abgelegt. Durch die Kombination aus (oberem) Schlitz und (unterem) Hohlraum wird der Boden nur noch gering verworfen, so dass einerseits eine exakte Positionierung von Saatgut, andererseits auch ein konzentriertes schnurförmiges Düngerdepot, beispielsweise zwischen zwei Pflanzenreihen, platziert werden kann. Aufgrund des schmalen Grundkörpers und der hierdurch verminderten Zugkraft zum Bewegen desselben durch den Boden, ergibt sich schließlich auch ein geringerer Energieaufwand und lässt sich insbesondere ein tieferer Schlitz erzeugen, um für große Injektionstiefen der jeweils in dem Schlitz abzulegenden Stoffe zu sorgen.

Der Austrittskörper der Injektionseinrichtung kann vorzugsweise gegenüber der - in Fahrtrichtung betrachtet - Vorderseite des Grundkörpers vorstehen oder mit der Vorderseite des Grundkörpers bündig abschließen. Durch eine solche, z.B. etwa "speerspitzen-" oder "geschossartige" Anordnung des Austrittskörpers der Injektionseinrichtung an ihrem Grundkörper wird der Boden zuerst zur Bildung des breiteren Hohlraums geweitet, bevor anschließend oder gleichzeitig durch den Grundkörper der nach oben hin offene Schlitz gebildet wird. Der Austrittskörper der Injektionseinrichtung kann in diesem Zusammenhang vorteilhafterweise eine im Wesentlichen konisch geformte Spitze aufweisen, damit der Durchgang durch den Boden erleichtert wird. Die konisch geformte Spitze muss nicht notwendigerweise einen runden Querschnitt besitzen, sondern kann beispielsweise auch einen ovalen oder mehreckigen Querschnitt aufweisen.

In weiterhin vorteilhafter Ausgestaltung kann vorgesehen sein, dass eine Austrittsöffnung des Austrittskörpers der Injektionseinrichtung nach unten und nach hinten gerichtet ist. Dabei kann die nach hinten und nach unten gerichtete Austrittsöffnung insbesondere im Wesentlichen konisch geformt sein. Die konische Form der Austrittsöffnung verhindert eine Verstopfung der Austrittsöffnung durch den Boden.

Überdies kann selbstverständlich vorgesehen sein, dass der Schlitzverschlusseinrichtung ein Stützrad, eine Andruckrolle oder dergleichen nachgeordnet ist, um den mittels der Schlitzverschlusseinrichtung verschlossenen Schlitz zu verdichten und das Erdreich gegen das in abgelegte Streu- und/oder Saatgut anzudrücken.

Weitere Merkmale und Vorteile der Erfindung ergeben sich aus der nachfolgenden Beschreibung eines Ausführungsbeispiels unter Bezugnahme auf die Zeichnungen. Dabei zeigen:
- Fig. 1: eine schematische Ansicht einer Ausführungsform einer Bodenbearbeitungsmaschine von deren Heck aus betrachtet;
- Fig. 2: eine schematische Seitenansicht einer Schar der Bodenbearbeitungsmaschine gemäß Fig. 1;
- Fig. 3: eine schematische Draufsicht auf den Grundkörper der Injektionseinrichtung der Schar gemäß Fig. 2 von oben;
- Fig. 4: eine schematische Seitenansicht der Injektions-einrichtung einschließlich der dieser nachgeordneten Schlitzverschlusseinrichtung der Schar gemäß Fig. 2 von hinten; und
- Fig. 5: eine schematische Draufsicht auf die Injektionseinrichtung einschließlich deren Austrittskörpers der Schar gemäß Fig. 2 von unten.

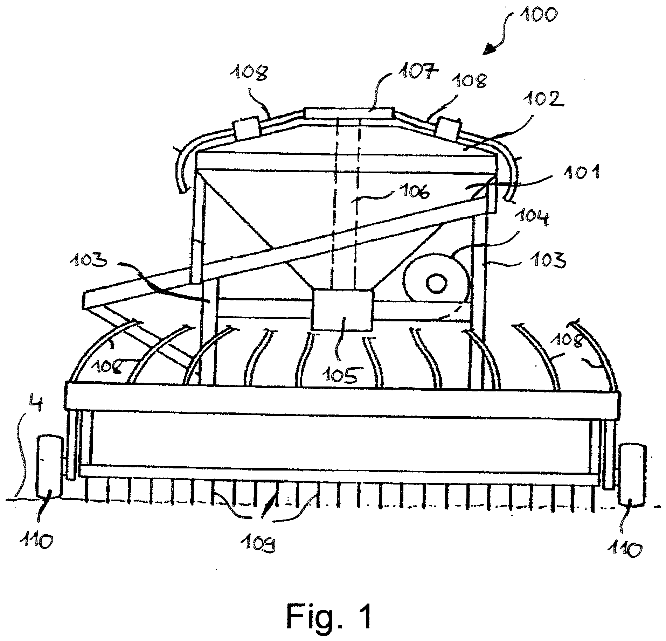

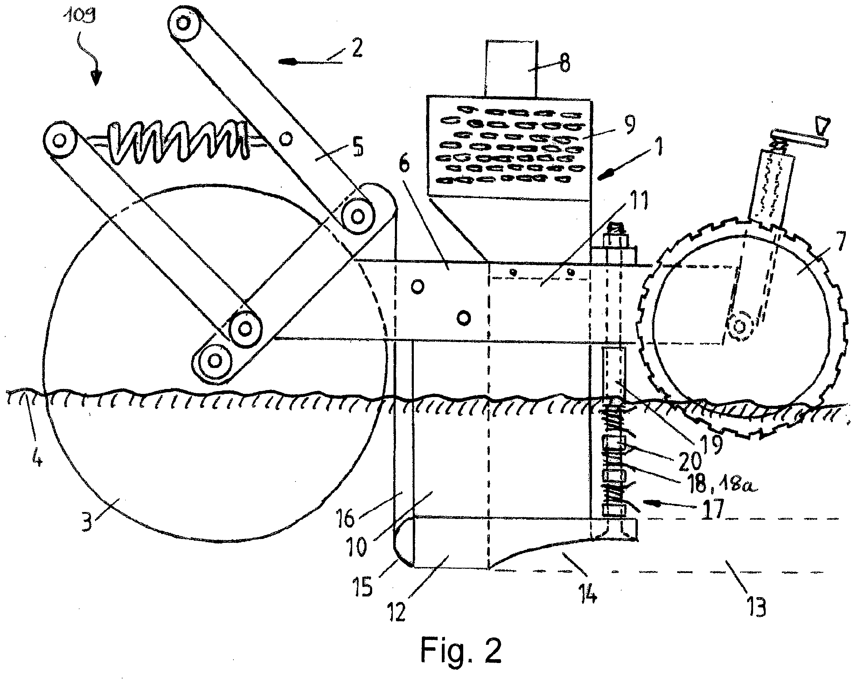

In Fig. 1 ist ein Ausführungsbeispiel einer insgesamt mit dem Bezugszeichen 100 versehenen Bodenbearbeitungsmaschine in stark schematisierter Darstellung wiedergegeben, bei welcher es sich im vorliegenden Fall beispielsweise um eine pneumatische Verteilmaschine zum Ausbringen von partikelförmigen Feststoffen, wie Saatgut und/oder Dünger, handelt. Die Bodenbearbeitungsmaschine 100, welche beispielsweise an einem üblichen Dreipunkgestänge eines Traktors lösbar festgelegt werden kann, umfasst einen Behälter 101 zur Aufnahme der partikelförmigen Stoffe mit einer Abdeckung 102, welche an Stützen 103 eines Rahmens getragen sind. An letzterem ist ferner ein Gebläse 104 zur Erzeugung eines Luftstroms festgelegt. Unterhalb eines Auslaufes des etwa trichterförmig nach unten zulaufenden Behälters 101 befindet sich eine in der Fig. 1 nur schematisch angedeutete Übergabeeinrichtung 105, welche zur Überführung der partikelförmigen Stoffe an eine Förderleitung 106 dient, welche von dem Gebläse 104 mit einem Luftstrom beaufschlagt ist, um die partikelförmigen Stoffe nach oben in einen Verteilerkopf 107 zu fördern. Der Verteilerkopf 107 umfasst eine Mehrzahl an um seinen Umfang verteilt angeordneten, sich im vorliegenden Fall etwa radial nach außen erstreckenden Anschlüssen, welche zweckmäßigerweise mittels einzeln und/oder gruppenweise betätigbarer Absperrorgane (nicht gezeigt), wie Klappen oder dergleichen, verschließbar sind, um die gewünschte Arbeitsbreite einzustellen und/oder auf dem Feld angelegte Fahrgassen auszusparen. An die jeweiligen Anschlüsse des Verteilerkopfes 107 schließt sich je eine z.B. nach Art eines Schlauches ausgebildete Verteilerleitung 108 an, von welchen in Fig. 1 aus Übersichtlichkeitsgründen nur einige abgebrochen dargestellt sind. Die Verteilerleitungen 108 sind von dem Verteilerkopf 107 ausgehend im Wesentlichen nach unten und hinten geführt und erstrecken sich mit ihren dem Verteilerkopf 107 abgewandten Enden zu je einer Injektionseinrichtung 1, welche weiter unten unter Bezugnahme auf die Fig. 2 näher erläutert und von je einer Schar 109 getragen ist. Die Scharen 109 sind in der Fig. 1 lediglich mit vertikalen Linien angedeutet. Der Rahmen der Verteil- bzw. Bodenbearbeitungsmaschine 100 kann im Übrigen z.B. über Stützräder 110 auf dem Boden 4 abgestützt sein und insbesondere von diesem angehoben werden.

Es sei darauf hingewiesen, dass es sich bei der Bodenbearbeitungsmaschine nicht notwendigerweise um eine pneumatische Verteilmaschine handeln muss, sondern können selbstverständlich auch beliebige andere bekannte Verteilmaschinen vorgesehen sein, wie z.B. solche mit mechanischer Zufuhr des Streugutes/Saatgutes an die Scharen.

Die Fig. 2 zeigt eine schematische Darstellung einer der Scharen 109 der Bodenbearbeitungsmaschine gemäß Fig. 1. Wie hieraus erkennbar, ist die Schar 109 mit einer Injektionseinrichtung 1 ausgestattet, welche - in Fahrtrichtung 2 gesehen - hinter einer Schneidscheibe 3 angeordnet ist. Die Schneidscheibe 3 schneidet den Boden 4 bis zu einer einstellbaren Tiefe und bis auf Höhe einer Austrittsöffnung (siehe hierzu weiter unten) auf. Die konstante Schneidtiefe wird über eine bewegliche, beispielsweise parallelogrammartige Aufhängung 5 der Trageinrichtung der Schar 109 sichergestellt, mittels welcher eine jeweilige Schar 109 einerseits an die Bodenbearbeitungsmaschine 100 (Fig. 1) ankoppelbar ist und welche andererseits die Schneidscheibe 3 trägt. Die Trageinrichtung der Schar 109 umfasst beim vorliegenden Ausführungsbeispiel neben der Aufhängung 5 eine Halteplatte 6, welche mit der Aufhängung verbunden ist und sich etwa parallel zum Boden 4 erstreckt. An der Halteplatte 6 ist in fluchtender Linie hinter der Schneidscheibe 3 die Injektionseinrichtung 1 befestigt. An der Halteplatte 6 kann ferner - wiederum in Fahrtrichtung 2 gesehen - hinter der Injektionseinrichtung 1 ein Stützrad 7 befestigt sein. Das Stützrad 7 dient zur Führung der Schar 109 auf dem Boden 4 sowie nach Art einer Andruckrolle zum endgültigen Verschließen eines von der Injektionseinrichtung 1 im Boden erzeugten Schlitzes bzw. einer Säfurche an der Bodenoberfläche, indem der mittels einer weiter unten im Einzelnen erläuterten Schlitzverschlusseinrichtung 17 verschlossene Schlitz eingeebnet und das in dem Schlitz befindliche Bodenmaterial verdichtet wird.

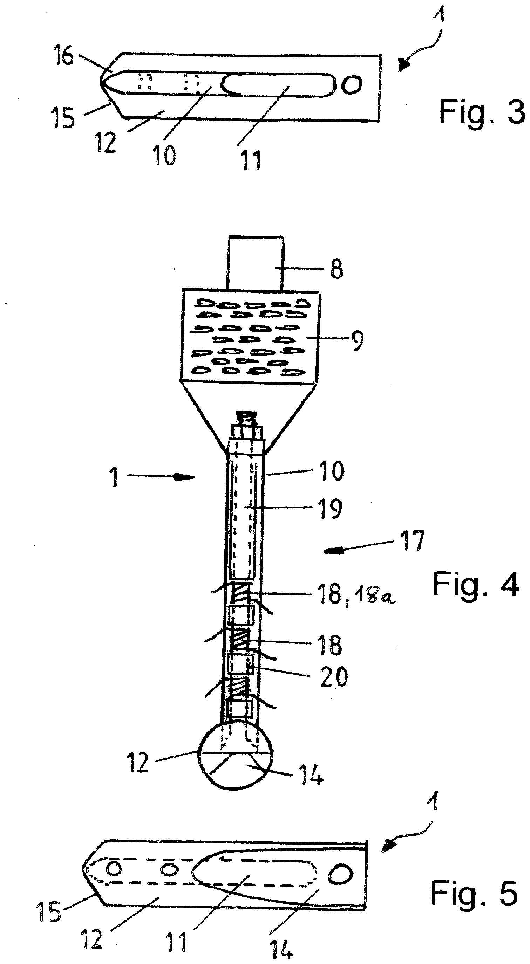

Die Injektionseinrichtung 1 ist in ihrem oberen Bereich mit einer Stoffzufuhr 8 verbunden, welche von einer jeweiligen Verteilerleitung 108 (siehe Fig. 1) der Bodenbearbeitungsmaschine mit den auszubringenden Stoffen, beispielsweise Dünger und/oder Saatgut, versorgt ist. Der Stoffzufuhr 8 ist eine Entlüftungseinrichtung 9 nachgeordnet, damit die Zufuhr nicht verstopft wird und die partikelförmigen Stoffe drucklos in die Injektionseinrichtung 1 rieseln können. Weiterhin weist die Injektionseinrichtung 1 einen Grundkörper 10 auf, durch welchen ein Kanal 11 von oben nach unten verläuft. Am unteren Ende des Grundkörpers 10 ist ein Austrittskörper 12 angeordnet. Die durch die Stoffzufuhr 8 zugeführten, partikelförmigen Stoffe gelangen folglich über den Kanal 11 zu dem Austrittskörper 12 und treten im unteren Bereich und hinteren Bereich des Austrittskörpers 12 in einen Hohlraum 13 aus, welcher im Boden 4 durch die Vorwärtsbewegung des Austrittskörpers 12 erzeugt wird. Nach oben zur Bodenoberfläche hin schließt sich an den Hohlraum 13 eine schlitzartige Öffnung in dem Boden 4 an, welcher durch die Bewegung des Grundkörpers 10 der Injektionseinrichtung 1 im Boden 4 erzeugt wird. Der Grundkörper 10 ist dabei so flach ausgebildet, dass im Betrieb der Injektionseinrichtung 1 eine schmale schlitzartige Öffnung in dem Boden 4 entsteht. Der Grundkörper 10 ist dabei schmäler ausgebildet als der Austrittskörper 12, so dass die schlitzartige Öffnung des Bodens 4 auch schmäler ist als der Hohlraum 13. Die Form des Hohlraums 13 entspricht im Wesentlichen der Form des Austrittskörpers 12 und kann rund, oval oder eckig oder in sonstiger Weise ausgebildet sein. Wie insbesondere auch aus der Fig. 5 hervorgeht, weist der Austrittskörper 12 nach unten hin eine Austrittsöffnung 14 auf, welche sowohl konisch nach hinten als auch konisch nach unten ausgebildet ist. Durch die konische Ausbildung der Austrittsöffnung 14 wird ein Verstopfen der Austrittsöffnung 14 vermieden. Wie ferner insbesondere auch der Fig. 3 zu entnehmen ist, ist der Querschnitt des Kanals 11 geringer als der Querschnitt der Austrittsöffnung 14. Der Grundkörper 10 und der Austrittskörper 12 sind beispielsweise beide aus Metall gefertigt und miteinander verschweißt oder austauschbar bzw. lösbar aneinander festgelegt, z.B. mittels Schrauben oder dergleichen (nicht gezeigt). Damit während des Betriebs der Austrittskörper 12 den Boden 4 in einfacher Weise durchdringen kann, weist der Austrittskörper 12 eine im Wesentlichen konisch geformte Spitze 15 auf. Das vordere Ende der Spitze 15 schließt im vorliegenden Fall bündig mit einer Scheidkante 16 des Grundkörpers 10 ab, kann demgegenüber aber selbstverständlich z.B. auch vorstehen (nicht gezeigt). Durch die Schneidkante 16 kann der Boden 4 im Betrieb besser aufgeschnitten werden.

Wie wiederum aus den Fig. 2 und 4 ersichtlich, ist der Injektionseinrichtung 1 - in Fahrtrichtung 2 gesehen - eine Schlitzverschlusseinrichtung 17 nachgeordnet, welche hinter dem Grundkörper 10 der Injektionseinrichtung 1, also an der Rückseite desselben positioniert ist und zum Wiederbefüllen des in dem Boden 4 erzeugten Schlitzes dient, unmittelbar nachdem dort die partikelförmigen Stoffe mittels der Injektionseinrichtung 1 abgelegt worden sind. Die Schlitzverschlusseinrichtung 17 ist im Falle des gezeigten Ausführungsbeispiels mit ihrem unteren Ende an dem hinteren Ende des Austrittskörpers 12 der Injektionseinrichtung 1 angeordnet und mit ihrem oberen Ende mit der Halteplatte 6 der Trageinrichtung der Schar 109 verbunden. Indes ist es beispielsweise auch möglich, die Schlitzverschlusseinrichtung 17 nur an deren Oberseite - sei es an der Injektionseinrichtung 1 oder sei es an der Trageinrichtung - festzulegen (nicht gezeigt), wodurch es möglich sein kann, die Schlitzverschlusseinrichtung 17 während des Betriebs mit ihrem unteren Ende noch tiefer in den Schlitz einzuführen.

Die Schlitzverschlusseinrichtung 17 weist im vorliegenden Fall mehrere übereinander angeordnete Kratzelemente 18 auf, welche hier von Federelementen 18a gebildet sind, die aus einem elastisch nachgiebigen Material, wie beispielsweise Federstahl oder dergleichen, gefertigt sind. Bei den Federelementen 18a handelt es sich im vorliegenden Fall um Schenkelfedern, welche jeweils einen zentralen Lagerabschnitt in Form einer spiralförmigen Wicklung sowie von deren Enden etwa radial nach außen vorstehende, endständige Kratzabschnitte aufweisen. An ihren freien Enden - oder genauer: an den Enden ihrer Kratzabschnitte - weisen die Federelemente 18a eine scharfe Spitze auf, wobei sie je nach Bodenbeschaffenheit beispielsweise auch eine abgeflachte, gedrehte, scharfe oder abgerundete Spitze und/oder Haken aufweisen können (nicht gezeigt).

Die Federelemente 18a sind bei dem zeichnerisch wiedergegebenen Ausführungsbeispiel beweglich und übereinander an einem im Wesentlichen stabförmigen Träger angeordnet, welcher etwa senkrecht bzw. vertikal angeordnet ist, um möglichst tief in den im Boden 4 erzeugten Schlitz eingreifen zu können. Bei dem stabförmigen Träger kann es sich z.B. um eine Stange 18 handeln, stattdessen aber auch ein elastisch nachgiebiger Träger, wie ein Drahtseil, ein Federzinken oder dergleichen, vorgesehen sein (jeweils nicht gezeigt), was insbesondere - wenn auch nicht ausschließlich - dann zweckmäßig sein kann, wenn die Kratzelemente 18 selbst nicht oder nur geringfügig elastisch sind. Ferner kann der stabförmige Träger auch zumindest geringfügig nach hinten geneigt sein (d.h. sein unteres Ende ist in Fahrtrichtung weiter hinten angeordnet als sein oberes Ende; nicht gezeigt). Die bewegliche Anordnung der Federelemente 18a ergibt sich im vorliegenden Fall dadurch, dass sie mit ihrem spiralförmig gewickelten Lagerabschnitt drehbar an der Stange 18, welche diesen Lagerabschnitt durchgreift, gelagert sind, während ihre Kratzabschnitte nach außen in Richtung der Seitenwände des Schlitzes vorragen. Jedes einzelne Federelement 18a ist von dem anderen Federelement 18a durch einen Distanzring 20 getrennt, um ihnen sowohl rotatorische als auch elastische Bewegungsfreiheit unabhängig voneinander zu verleihen. Mittels der als Federelemente 18a ausgebildeten Kratzelemente 18 wird der von dem Grundkörper 10 der Injektionseinrichtung 1 erzeugte Schlitz im Boden 4 wieder in sehr wirksamer Weise verschlossen, indem die sowohl beweglichen als auch insbesondere elastisch nachgiebigen Federelemente 18a die Seitenwände des Schlitzes aufkratzen, so dass der Boden unmittelbar nach Ablage der partikelförmigen Feststoffe in den Schlitz fällt und diesen unter Bedeckung der Stoffe verschließt.

Die Funktionsweise der vorstehend beschriebenen Schar 109 gestaltet sich demnach im Wesentlichen wie folgt: Während des Betriebs wird durch den Grundkörper 10 der Injektionseinrichtung 1 ein Schlitz in dem Boden 4 erzeugt. Gleichzeitig erzeugt der Austrittskörper 12 einen Hohlraum 13 im Boden 4, welcher sich am unteren Ende des Schlitzes befindet und der Form des Austrittskörpers 12 angepasst ist. Gleichzeitig mit der Vorwärtsbewegung der Injektionseinrichtung 1 gelangen die zugeführten Stoffe über die Stoffzufuhr 8 und den Kanal 11 und die Austrittsöffnung 14 des Austrittskörpers 12 in den Hohlraum 13. Damit ist eine präzise Ablage und ein konzentriertes schnurförmiges Depot der festen Stoffe, z.B. granuliertem Dünger, Saatgut etc., in dem Boden 4 gewährleistet. Durch die, z.B. in die Injektionseinrichtung 1 integrierte, Schlitzverschlusseinrichtung 17 wird direkt nach Ablage der Stoffe der Schlitz und auch der Hohlraum 13 nach oben hin wieder verschlossen, indem die Kratz- 18 bzw. Federelemente 18a den Boden innenseitig des Schlitzes aufkratzen. Ein oberflächiges Verschließen bzw. Verdichten des Schlitzes im Boden 4 kann schließlich durch das nachfolgende Stützrad 7 mit Häufelfunktion erfolgen, welches fluchtend hinter der Injektionseinrichtung 1 und der dieser nachgeordneten Schlitzverschlusseinrichtung 17 angeordnet ist.

## Patentansprüche

1. Bodenbearbeitungsmaschine (100), insbesondere Düngerstreuer und/oder Sämaschine, mit wenigstens einer Injektionseinrichtung (1) zur Ablage von festen partikelförmigen Stoffen, insbesondere Streugut und/oder Saatgut, in einem Boden (4), wobei die Injektionseinrichtung (1) einen Grundkörper (10) und einen am unteren Ende des Grundkörpers (10) angeordneten Austrittskörper (12) für die Stoffe aufweist, und wobei der Injektionseinrichtung (1) ferner eine Schlitzverschlusseinrichtung (17) nachgeordnet ist, welche an der - in Fahrtrichtung (2) betrachtet - Rückseite des Grundkörpers (10) der Injektionseinrichtung (1) vorgesehen ist und wenigstens ein Kratzelement (18) aufweist, welches zum Wiederverschließen des von dem Grundkörper (10) erzeugten Schlitzes in dem Boden (4) ausgebildet ist, indem es die Seitenwände des in dem Boden (4) erzeugten Schlitzes aufkratzt, wobei die Schlitzverschlusseinrichtung wenigstens einen im Wesentlichen stabförmigen Träger aufweist, welcher im Wesentlichen vertikal angeordnet ist oder zumindest eine vertikale Erstreckungsrichtungskomponente aufweist und in den im Boden (4) erzeugten Schlitz eingreift, wobei an dem im Wesentlichen stabförmigen Träger das Kratzelement (18) angeordnet ist, **dadurch gekennzeichnet, dass**
- das Kratzelement (18) von einem Federelement (18a) gebildet ist und/oder
- es sich bei dem im Wesentlichen stabförmigen Träger um einen elastischen Träger handelt.

2. Bodenbearbeitungsmaschine nach Anspruch 1, **dadurch gekennzeichnet, dass** die Schlitzverschlusseinrichtung (17)
- an dem Grundkörper (10) und/oder an dem Austrittskörper (12) der Injektionseinrichtung (1) und/oder
- an einer Trageinrichtung (5, 6) derselben festgelegt ist.

3. Bodenbearbeitungsmaschine nach Anspruch 1 oder 2, **dadurch gekennzeichnet, dass** das Kratzelement (18) beweglich angeordnet ist.

4. Bodenbearbeitungsmaschine nach einem der Ansprüche 1 bis 3, **dadurch gekennzeichnet, dass** der im Wesentlichen stabförmige Träger in Form einer Stange (19), eines Drahtseil oder eines Federzinkens ausgebildet ist.

5. Bodenbearbeitungsmaschine nach Anspruch 4, **dadurch gekennzeichnet, dass** das Kratzelement (18) drehbar an der Stange (19), an dem Drahtseil oder an dem Federzinken gelagert ist.

6. Bodenbearbeitungsmaschine nach einem der Ansprüche 1 bis 5, **dadurch gekennzeichnet, dass** eine Mehrzahl an Kratzelementen (18) übereinander angeordnet ist, wobei die Kratzelemente (18) insbesondere durch Distanzringe (20) voneinander getrennt sind.

7. Bodenbearbeitungsmaschine nach einem der Ansprüche 1 bis 6, **dadurch gekennzeichnet, dass** das als Federelement (18a) ausgebildete Kratzelement (18) eine Schenkelfeder aufweist.

8. Bodenbearbeitungsmaschine nach einem der Ansprüche 1 bis 7, **dadurch gekennzeichnet, dass** das als Federelement (18a) ausgebildete Kratzelement (18) einen im Wesentlichen in Form einer spiralförmigen Wicklung ausgebildeten Lagerabschnitt und wenigstens einen hiervon radial vorstehenden, endständigen Kratzabschnitt aufweist, wobei das Federelement (18a) insbesondere zwei von dem im Wesentlichen in Form einer spiralförmigen Wicklung ausgebildeten, zentralen Lagerabschnitt radial vorstehende, endständige Kratzabschnitte aufweist.

9. Bodenbearbeitungsmaschine nach einem der Ansprüche 1 bis 8, **dadurch gekennzeichnet, dass** das Kratzelement (18) an seinem/seinen freien Ende(n) abgeflachte, verbreiterte, gedrehte, scharfe oder abgerundete Spitzen und/oder Haken aufweist.

10. Bodenbearbeitungsmaschine nach einem der Ansprüche 1 bis 9, **dadurch gekennzeichnet, dass** zumindest das bzw. die Kratzelement(e) (18) der Schlitzverschlusseinrichtung (17), insbesondere die gesamte Schlitzverschlusseinrichtung (17), auswechselbar angeordnet ist bzw. sind.

11. Bodenbearbeitungsmaschine nach einem der Ansprüche 1 bis 10, **dadurch gekennzeichnet, dass** der Grundkörper (10) der Injektionseinrichtung (1) schmäler ausgebildet ist als deren Austrittskörper (12), wobei der Grundkörper (10) insbesondere derart flach oder schmal ausgebildet ist, dass beim Betrieb eine durch den Grundkörper (10) erzeugte schmale schlitzartige Öffnung in dem Boden (4) entsteht.

12. Bodenbearbeitungsmaschine nach einem der Ansprüche 1 bis 11, **dadurch gekennzeichnet, dass** der Austrittskörper (12) der Injektionseinrichtung (1) gegenüber der - in Fahrtrichtung (2) betrachtet - Vorderseite des Grundkörpers (10) vorsteht oder mit der Vorderseite des Grundkörpers (10) bündig abschließt, wobei der Austrittskörper (12) der Injektionseinrichtung (1) insbesondere eine im Wesentlichen konisch geformte Spitze aufweist.

13. Bodenbearbeitungsmaschine nach einem der Ansprüche 1 bis 12, **dadurch gekennzeichnet, dass** eine Austrittsöffnung (14) des Austrittskörpers (12) der Injektionseinrichtung (1) nach unten und nach hinten gerichtet ist, wobei insbesondere die nach hinten und nach unten gerichtete Austrittsöffnung (14) im Wesentlichen konisch geformt ist.

14. Schar, welche für eine Bodenbearbeitungsmaschine (100), insbesondere Düngerstreuer und/oder Sämaschine, nach einem der Ansprüche 1 bis 13 geeignet ist, mit
- einer Trageinrichtung (5, 6);
- wenigstens einer Schneideinrichtung (3);
- wenigstens einer Injektionseinrichtung (1) zur Ablage von festen partikelförmigen Stoffen, insbesondere Streugut und/oder Saatgut, in einem Boden (4), wobei die Injektionseinrichtung (1) einen Grundkörper (10) und einen am unteren Ende des Grundkörpers (10) angeordneten Austrittskörper (12) für die Stoffe aufweist; und
- einer der Injektionseinrichtung (1) nachgeordneten Schlitzverschlusseinrichtung (17), welche an der - in Fahrtrichtung (2) betrachtet - Rückseite des Grundkörpers (10) der Injektionseinrichtung (1) vorgesehen ist und wenigstens ein Kratzelement (18) aufweist, welches zum Wiederverschließen des von dem Grundkörper (10) erzeugten Schlitzes in dem Boden (4) ausgebildet ist, indem es die Seitenwände des in dem Boden (4) erzeugten Schlitzes aufkratzt, wobei die Schlitzverschlusseinrichtung wenigstens einen im Wesentlichen stabförmigen Träger aufweist, welcher im Wesentlichen vertikal angeordnet ist oder zumindest eine vertikale Erstreckungsrichtungskomponente aufweist und in den im Boden (4) erzeugten Schlitz eingreift, wobei an dem im Wesentlichen stabförmigen Träger das Kratzelement (18) angeordnet ist, **dadurch gekennzeichnet, dass**
- das Kratzelement (18) von einem Federelement (18a) gebildet ist und/oder
- es sich bei dem im Wesentlichen stabförmigen Träger um einen elastischen Träger handelt.

15. Schar nach Anspruch 14, **gekennzeichnet durch** die kennzeichnenden Merkmale wenigstens eines der Ansprüche 2 bis 13, wobei der Schlitzverschlusseinrichtung (17) insbesondere ein Stützrad (7) und/oder eine Andruckrolle nachgeordnet ist.

## Claims

1. Soil working machine (100), in particular fertilizer spreader and/or seeder, with at least one injection device (1) for depositing solid particulate materials, in particular spreading material and/or seeds, in a soil (4), wherein the injection device (1) has a main body (10) and an outlet body (12) for the materials, said outlet body being arranged at the lower end of the main body (10), and wherein a slit-closing device (17) is furthermore arranged downstream of the injection device (1) and is provided on the rear side of the main body (10) of the injection device (1) - as viewed in the direction of travel (2) - and has at least one scraping element (18) which is configured for reclosing the slit, which is produced by the main body (10), in the soil (4) by scraping the side walls of the slit produced in the soil (4), wherein the slit-closing device has at least one substantially rod-shaped carrier which is arranged substantially vertically or has at least one vertical direction of extent component and engages in the slit produced in the soil (4), wherein the scraping element (18) is arranged on the substantially rod-shaped carrier, **characterized in that**
- the scraping element (18) is formed by a spring element (18a) and/or
- the substantially rod-shaped carrier is an elastic carrier.

2. Soil working machine according to Claim 1, **characterized in that** the slit-closing device (17) is secured
- on the main body (10) and/or on the outlet body (12) of the injection device (1) and/or
- on a supporting device (5, 6) of the latter.

3. Soil working machine according to Claim 1 or 2, **characterized in that** the scraping element (18) is arranged movably.

4. Soil working machine according to one of Claims 1 to 3, **characterized in that** the substantially rod-shaped carrier is configured in the form of a rod (19), a wire cable or a spring tine.

5. Soil working machine according to Claim 4, **characterized in that** the scraping element (18) is mounted rotatably on the rod (19), on the wire cable or on the spring tine.

6. Soil working machine according to one of Claims 1 to 5, **characterized in that** a plurality of scraping elements (18) are arranged one above another, wherein the scraping elements (18) are separated from one another in particular by spacer rings (20).

7. Soil working machine according to one of Claims 1 to 6, **characterized in that** the scraping element (18) designed as a spring element (18a) has a leg spring.

8. Soil working machine according to one of Claims 1 to 7, **characterized in that** the scraping element (18) configured as a spring element (18a) has a bearing portion configured substantially in the form of a spiral coil, and at least one end scraping portion protruding radially from said bearing portion, wherein the spring element (18a) in particular has two end scraping portions protruding radially from the central bearing portion configured substantially in the form of a spiral coil.

9. Soil working machine according to one of Claims 1 to 8, **characterized in that** the scraping element (18) has flattened, expanded, rotated, sharp or rounded points and/or hooks at its free end(s).

10. Soil working machine according to one of Claims 1 to 9, **characterized in that** at least the scraping element(s) (18) of the slit-closing device (17), in particular the entire slit-closing device (17), is or are arranged exchangeably.

11. Soil working machine according to one of Claims 1 to 10, **characterized in that** the main body (10) of the injection device (1) is of narrower design than the outlet body (12) thereof, wherein the main body (10) is in particular of such flat or narrow configuration that, during operation, a narrow slit-like opening, produced by the main body (10), arises in the soil (4).

12. Soil working machine according to one of Claims 1 to 11, **characterized in that** the outlet body (12) of the injection device (1) protrudes in relation to the front side of the main body (10) - as viewed in the direction of travel (2) - or ends flush with the front side of the main body (10), wherein the outlet body (12) of the injection device (1) in particular has a substantially conically shaped point.

13. Soil working machine according to one of Claims 1 to 12, **characterized in that** an outlet opening (14) of the outlet body (12) of the injection device (1) is directed downwards and rearwards, wherein in particular the rearwardly and downwardly directed outlet opening (14) is shaped substantially conically.

14. Coulter which is suitable for a soil working machine (100), in particular fertilizer spreader and/or seeder, according to one of Claims 1 to 13, with
- a supporting device (5, 6);
- at least one cutting device (3);
- at least one injection device (1) for depositing solid particulate materials, in particular spreading material and/or seeds, in a soil (4), wherein the injection device (1) has a main body (10) and an outlet body (12) for the materials, said outlet body being arranged at the lower end of the main body (10); and
- a slit-closing device (17) arranged downstream of the injection device (1) is provided on the rear side of the main body (10) of the injection device (1) - as viewed in the direction of travel (2) - and has at least one scraping element (18) which is configured for reclosing the slit, which is produced by the main body (10), in the soil (4) by scraping the side walls of the slit produced in the soil (4), wherein the slit-closing device has at least one substantially rod-shaped carrier which is arranged substantially vertically or has at least one vertical direction of extent component and engages in the slit produced in the soil (4), wherein the scraping element (18) is arranged on the substantially rod-shaped carrier, **characterized in that**
- the scraping element (18) is formed by a spring element (18a) and/or
- the substantially rod-shaped carrier is an elastic carrier.

15. Coulter according to Claim 14, **characterized by** the characterizing features of at least one of Claims 2 to 13, wherein in particular a supporting wheel (7) and/or a pressure roller are/is arranged downstream of the slit-closing device (17).

## Revendications

1. Machine de travail du sol (100), notamment épandeur d'engrais et/ou machine à semer, avec au moins un dispositif d'injection (1) pour le dépôt de matières solides sous forme particulaire, notamment de produit dispersible et/ou de semences, dans un sol (4), le dispositif d'injection (1) comportant un corps de base (10) et un corps de sortie (12) disposé au niveau de l'extrémité inférieure du corps de base (10) pour les matières et un dispositif de fermeture de sillon (17) étant en outre placé en aval du dispositif d'injection (1) et prévu au niveau du côté arrière - considéré dans la direction de conduite (2) - du corps de base (10) du dispositif d'injection (1) et comportant au moins un élément racloir (18) réalisé pour refermer le sillon réalisé dans le sol (4) par le corps de base (10) en raclant les parois latérales du sillon réalisé dans le sol (4), le dispositif de fermeture de sillon comportant au moins un support pour l'essentiel en forme de barre disposé pour l'essentiel verticalement ou comportant au moins une composante de direction d'extension verticale et mordant dans le sillon réalisé dans le sol (4), l'élément racloir (18) étant disposé au niveau du support pour l'essentiel en forme de barre, **caractérisée en ce que** :
- l'élément racloir (18) est formé par un élément de ressort (18a) ; et/ou
- le support pour l'essentiel en forme de barre est un support élastique.

2. Machine de travail du sol selon la revendication 1, **caractérisée en ce que** le dispositif de fermeture de sillon (17) est fixé :
- au corps de base (10) et/ou au corps de sortie (12) du dispositif d'injection (1) ; et/ou
- à un dispositif portant (5, 6) de celui-ci.

3. Machine de travail du sol selon la revendication 1 ou 2, **caractérisée en ce que** l'élément racloir (18) est disposé de façon mobile.

4. Machine de travail du sol selon l'une quelconque des revendications 1 à 3, **caractérisée en ce que** le support pour l'essentiel en forme de barre est réalisé sous la forme d'une tige (19), d'un câble d'acier ou de dents ressorts.

5. Machine de travail du sol selon la revendication 4, **caractérisée en ce que** l'élément racloir (18) est disposé de façon à pouvoir tourner au niveau de la tige (19), au niveau du câble d'acier ou des dents ressorts.

6. Machine de travail du sol selon l'une quelconque des revendications 1 à 5, **caractérisée en ce qu'**une pluralité d'éléments racloirs (18) sont disposés les uns au-dessus des autres, les éléments racloirs (18) étant notamment séparés les uns des autres par des bagues d'écartement (20).

7. Machine de travail du sol selon l'une quelconque des revendications 1 à 6, **caractérisée en ce que** l'élément racloir (18) réalisé sous la forme d'un élément de ressort (18a) comporte un ressort à branches.

8. Machine de travail du sol selon l'une quelconque des revendications 1 à 7, **caractérisée en ce que** l'élément racloir (18) réalisé sous la forme d'un élément de ressort (18a) comporte une section de palier réalisée pour l'essentiel sous la forme d'un enroulement en forme de spirale et au moins une section raclante terminale ressortant de celui-ci dans le plan radial, l'élément de ressort (18a) comportant notamment deux sections raclantes terminales ressortant dans le plan radial de la section de palier centrale réalisée pour l'essentiel en forme de spirale.

9. Machine de travail du sol selon l'une quelconque des revendications 1 à 8, **caractérisée en ce que** l'élément racloir (18) comporte au niveau de son et/ou ses extrémités libres des pointes et/ou crochets aplatis, élargis, tournés, acérés ou arrondis.

10. Machine de travail du sol selon l'une quelconque des revendications 1 à 9, **caractérisée en ce qu'**au moins le et/ou les éléments racloirs (18) du dispositif de fermeture de sillon (17), notamment de la totalité du dispositif de fermeture de sillon (17), est et/ou sont disposés de façon amovible.

11. Machine de travail du sol selon l'une quelconque des revendications 1 à 10, **caractérisée en ce que** le corps de base (10) du dispositif d'injection (1) est réalisé de façon plus étroite que son corps de sortie (12), le corps de base (10) étant notamment réalisé plat ou étroit de telle sorte qu'apparaisse en fonctionnement une ouverture étroite de type sillon réalisée dans le sol (4) par le corps de base (10).

12. Machine de travail du sol selon l'une quelconque des revendications 1 à 11, **caractérisée en ce que** le corps de sortie (12) du dispositif d'injection (1) ressort, par rapport au côté avant - considéré dans la direction de conduite (2) - du corps de base (10) ou se finit en affleurement par le côté avant du corps de base (10), le corps de sortie (12) du dispositif d'injection (1) comportant notamment une pointe formée pour l'essentiel de façon conique.

13. Machine de travail du sol selon l'une quelconque des revendications 1 à 12, **caractérisée en ce qu'**une ouverture de sortie (14) du corps de sortie (12) du dispositif d'injection (1) est orientée vers le bas et vers l'arrière, l'ouverture de sortie (14) orientée vers l'arrière et vers le bas étant notamment formée pour l'essentiel de façon conique.

14. Soc, adapté pour une machine de travail du sol (100), notamment un épandeur d'engrais et/ou une machine à semer, selon l'une quelconque des revendications 1 à 13, avec :
- un dispositif portant (5, 6) ;
- au moins un dispositif tranchant (3) ;
- au moins un dispositif d'injection (1) pour le dépôt de matières solides sous forme particulaire, notamment de produit dispersible et/ou de semences, dans un sol (4), le dispositif d'injection (1) comportant un corps de base (10) et un corps de sortie (12) disposé au niveau de l'extrémité inférieure du corps de base (10) pour les matières ; et
- un dispositif de fermeture de sillon (17) placé en aval du dispositif d'injection (1) et prévu au niveau du côté arrière - considéré dans la direction de conduite (2) - du corps de base (10) du dispositif d'injection (1) et comportant au moins un élément racloir (18) réalisé pour refermer le sillon réalisé dans le sol (4) par le corps de base (10) en raclant les parois latérales du sillon réalisé dans le sol (4), le dispositif de fermeture de sillon comportant au moins un support pour l'essentiel en forme de barre disposé pour l'essentiel verticalement ou comportant au moins une composante de direction d'extension verticale et mordant dans le sillon réalisé dans le sol (4), l'élément racloir (18) étant disposé au niveau du support pour l'essentiel en forme de barre, **caractérisé en ce que** :
- l'élément racloir (18) est formé par un élément de ressort (18a) ; et/ou
- le support pour l'essentiel en forme de barre est un support élastique.

15. Soc selon la revendication 14, **caractérisé par** les caractéristiques caractérisantes d'au moins une des revendications 2 à 13, une roue-support (7) et/ou un rouleau compresseur étant notamment placés en aval du dispositif de fermeture de sillon (17).
